# FASCICULE DE BREVET EUROPEEN

(11) **EP 1 030 493 B1**
(45) Date de publication et mention de la délivrance du brevet: **01.10.2008**
(21) Numéro de dépôt: 00400366.1
(22) Date de dépôt: 09.02.2000
(51) Int. Cl.: H04L 12/56

(54) **Procédé pour associer des références d'acheminement à des paquets de données au moyen d'une mémoire TRIE, et dispositif de traitement de paquets appliquant ce procédé**
Verfahren um Verteilungsreferenzen mit Datenpaketen mittels eines TRIE-Speichers zu verknüpfen und Paketverarbeitungssystem das dieses Verfahren anwendet
Method for associating distribution references with data packets using a TRIE-type memory and data processing system executing this method

(30) Priorité: 12.02.1999 FR 9901714
(43) Date de publication de la demande: 23.08.2000
(73) Titulaire: FRANCE TELECOM, 75015 Paris (FR)
(72) Inventeur: Duret, Christian, 92320 Chatillon (FR); Lattmann, Joel, 77420 Champs sur Marne (FR); Bonjour, Servane, 92100 Boulogne Billancourt (FR); Guesdon, Hervé, 92240 Malakoff (FR)
(74) Mandataire: Loisel, Bertrand

(56) Documents cités:
- EP-A- 0 380 294
- WO-A-96/00945
- WO-A-98/27662
- FR-A- 2 707 775
- SRINIVASAN V ET AL: "Fast and scalable layer four switching" ACM SIGCOMM'98 CONFERENCE. APPLICATIONS, TECHNOLOGIES, ARCHITECTURES, AND PROTOCOLS FOR COMPUTER COMMUNICATION, VANCOUVER, BC, CANADA, 2-4 SEPT. 1998, vol. 28, no. 4, pages 191-202, XP002107832 ISSN 0146-4833, Computer Communication Review, Oct. 1998, ACM, USA
- TONG-BI PEI ET AL: "PUTTING ROUTING TABLES IN SILICON" IEEE NETWORK: THE MAGAZINE OF COMPUTER COMMUNICATIONS, vol. 6, no. 1, 1 janvier 1992 (1992-01-01), pages 42-50, XP000262202

## Description

La présente invention concerne les mémoires associatives, et particulièrement les mémoires de type « TRIE » (du verbe anglais « reTRIEve »).

Le principe de la mémoire « TRIE » a été proposé par R. de la Briandais et E. Fredkin vers la fin des années 1950 (voir E. Fredkin et al.: « Trie Memory », Communications of the ACM, Vol.3, No.9, septembre 1960, pages 490-499). Il consiste à découper les chaînes de bits à reconnaître en tranches successives de longueur fixe (de K bits) et à les intégrer dans un tableau T à deux dimensions. Chaque ligne du tableau constitue un *registre* de 2^{K} *cellules* élémentaires. Un registre (R) est attribué à chaque tranche de la chaîne et on associe une cellule dans le registre à la valeur (V), comprise entre 0 et 2^{K}-1 de cette tranche. Le contenu (C = T[R,V]) de la cellule ainsi déterminée représente soit le registre attribué à la tranche suivante (ou *pointeur*), soit une référence de fin d'analyse (ou « *status* ») si l'analyse de la chaîne doit se terminer sur cette tranche.

Le registre attribué à la première tranche de la chaîne, qui est aussi le point d'entrée de la table, est appelé *portier.* Les données à analyser sous forme de chaînes de bits, c'est-à-dire à comparer avec le contenu de la mémoire TRIE, seront également nommées *routes* ci-après. On appellera *chemin* dans la table la succession des cellules chaînées associées à une route. Chaque registre de la table sera dit d'ordre i≥0 s'il est attribué à la (i+1)-ième tranche d'une ou plusieurs routes mémorisées. Le registre portier est donc d'ordre 0. La mémoire TRIE associe à chacun de ses registres d'ordre i≥0 une unique séquence de iK bits correspondant aux iK premiers bits de chaque route dont le chemin dans la table passe par une cellule du registre en question.

L'exemple suivant montre une représentation du stockage des données dans une mémoire TRIE dans le cas particulier où K=4. La valeur de chaque tranche est représentée par un digit en numérotation hexadécimale (0,1,.. ,E,F), et les registres contiennent chacun 2⁴=16 cellules.

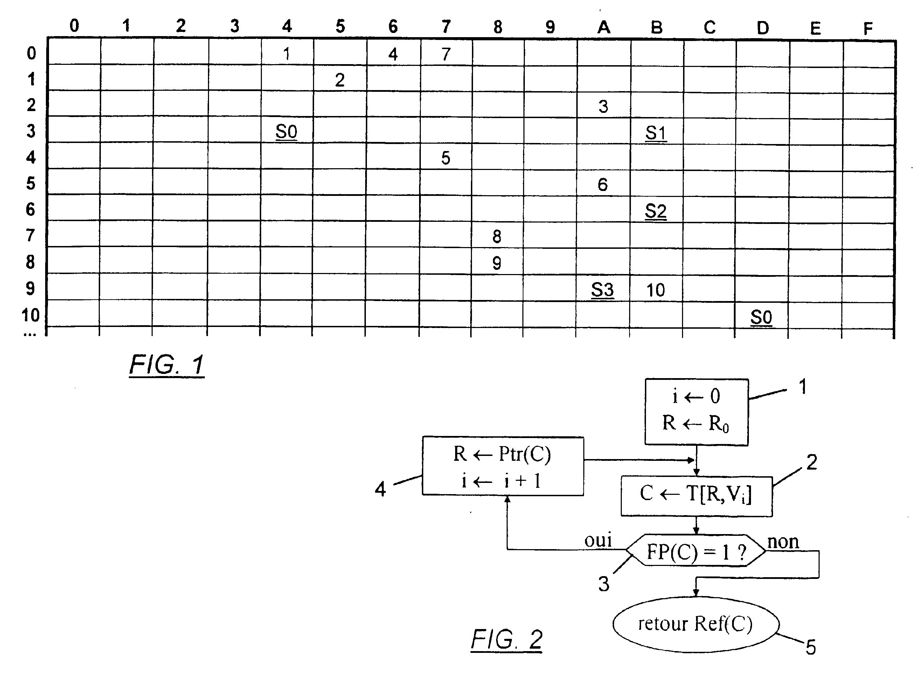

Soit à reconnaître les routes qui débutent par les motifs 45A4, 45AB, 67AB, 788A et 788BD, auxquels on attribue respectivement les status S0, S1, S2, S3 et S0 (un même status peut être partagé par plusieurs routes). En portant le registre R en indice de ligne, la valeur V des tranches en indice de colonne, et en prenant comme portier le registre R₀=0, la table de la mémoire TRIE peut se présenter comme représenté sur la figure 1, où les données soulignées sont des status. Les motifs 45A4, 45AB, 67AB, 788A et 788BD sont respectivement représentés dans la table de la figure 1 par les chemins :
T[0,4] → T[1,5] → T[2,A] → T[3,4] ;
T[0,4] → T[1,5] → T[2,A] → T[3,B] ;
T[0,6] → T[4,7] → T[5,A] → T[6,B] ;
T[0,7] → T[7,8] → T[8,8] → T[9,A] ;
T[0,7] → T[7,8] → T[8,8] → T[9,B] → T[10,D].

On voit sur cet exemple que tous les motifs commençant par une partie commune de iK bits sont représentés par un début de chemin commun dans la mémoire, menant au registre d'ordre i auquel est associée la séquence formée par ces iK bits.

Si l'on considère une route à analyser, découpée en une suite de tranches binaires de valeurs Vᵢ avec 0≤i≤N et {R₁} la suite des registres associés aux valeurs Vᵢ, R₀ désignant encore le registre portier, l'algorithme d'analyse mis en oeuvre peut être celui représenté sur la figure 2.

A l'initialisation 1 de cet algorithme, le rang d'analyse i est mis à 0 et le registre portier R₀ est sélectionné comme registre R. Dans chaque itération de rang i, le contenu C de la cellule T[R,Vᵢ] désignée par la (i+1)-ième tranche Vᵢ de la route dans le registre d'ordre i sélectionné est lu à l'étape 2. Si cette cellule contient un pointeur de poursuite d'analyse, ce qu'indique au test 3 la valeur 1 d'un bit FP(C) mémorisé dans la cellule, le registre d'ordre i+1 désigné par ce pointeur Ptr(C) est sélectionné comme registre R pour l'itération suivante à l'étape 4, et le rang i est incrémenté. Quand le test 3 révèle une cellule qui ne contient pas un pointeur (FP(C)=0), le status Ref(C) lu dans la cellule concernée est retourné à l'étape 5 comme résultat de la consultation de la table.

Cet algorithme permet l'analyse de routes comportant un nombre quelconque de tranches. Une même table peut être utilisée pour plusieurs types d'analyses en gérant les données à partir de portiers différents. De plus, il permet de maîtriser le temps d'analyse des données : l'analyse d'un nombre N de tranches de K bits durera au plus N fois la durée d'une itération.

L'algorithme de la figure 2 peut être mis en oeuvre de façon très rapide par un composant matériel gérant les accès au tableau de mémoire. Il permet notamment la réalisation de routeurs de haute performance pour des réseaux de télécommunications à commutation de paquets. L'en-tête des paquets est analysé au vol par le composant, et le status associé à une route désigne par exemple un port de sortie du routeur vers lequel doivent être acheminés les paquets portant une adresse de destination conforme à cette route.

Un tel routeur peut être multi-protocoles. Pour cela, on analyse des portions différentes de l'en-tête à partir de portiers différents. Par exemple, une première analyse d'un (ou plusieurs) champ de l'en-tête désignant le protocole employé et/ou la version de ce protocole peut être analysée à partir d'un premier portier. Cette première analyse fournit une référence qui, bien que correspondant à une fin logique d'analyse, peut être matérialisée dans la mémoire TRIE par un pointeur de poursuite d'analyse désignant un autre registre portier à utiliser pour analyser la suite de l'en-tête. La référence en question peut également déclencher des temporisations ou des sauts d'un nombre déterminé de bits dans l'en-tête analysé afin de pouvoir choisir quelle portion de l'en-tête doit être ensuite analysée. Dans la pratique, un certain nombre d'analyses sont généralement exécutées successivement, pour déclencher les opérations requises par les protocoles supportés en fonction du contenu des en-têtes. L'une de ces analyses portera sur l'adresse de destination pour accomplir la fonction de routage proprement dite.

Un routeur du type ci-dessus est décrit dans le brevet français 2 707 775. Au sujet de l'utilisation de mémoires TRIE dans des routeurs, on pourra se reporter à l'article « Putting Routing Tables in Silicon », de T.B. Pei et al., IEEE Network Magazine, janvier 1992, pages 42-50.

Le fait de pouvoir enchaîner plusieurs analyses élémentaires avec entre elles des sauts programmables procure une grande souplesse au procédé, particulièrement pour le traitement de protocoles encapsulés suivant plusieurs couches du modèle ISO. L'analyse au vol des tranches de l'en-tête au fur et à mesure de leur arrivée procure par ailleurs une grande rapidité.

Néanmoins, dans un certain nombre de cas de figures, il est utile de revenir en arrière dans l'en-tête analysé pour examiner certains champs dans un ordre différent de l'ordre d'arrivée. Ceci permet fréquemment une meilleure optimisation de la taille mémoire requise. C'est par ailleurs rendu nécessaire par certains protocoles, tels que le protocole de réservation RSVP ou des protocoles de multidiffusion (multicast).

Un but de la présente invention est d'améliorer encore la souplesse de traitement offerte par les mémoires TRIE, particulièrement dans les applications de routage.

L'invention propose ainsi un procédé tel qu'énoncé dans la revendication 1, dont des réalisations préférées sont énoncées dans les revendications 2 à 7.

Ainsi, le contenu de la mémoire TRIE ne représente plus seulement les références proprement dites associées aux en-têtes de paquets. Elle intègre en outre un programme consistant en l'enchaînement des analyses élémentaires à effectuer en fonction des différentes configurations prises en compte par la mémoire. Ces enchaînements sont entièrement programmables, en ce que l'utilisateur peut définir arbitrairement, et à chaque étape du processus, quelle portion de l'en-tête doit être examinée et à partir de quel registre de la mémoire TRIE.

Un autre aspect de la présente invention se rapporte à un dispositif de traitement de paquets tel qu'énoncé dans la revendication 8, dont des réalisations préférées sont énoncées dans les revendications 9 à 12. Ce dispositif peut effectuer tout type de traitement nécessitant une analyse d'en-tête. Il peut notamment être un routeur IP, un dispositif de sécurité tel qu'un pare-feu (« firewall »), un dispositif de mesure, etc.

D'autres particularités et avantages de la présente invention apparaîtront dans la description ci-après d'exemples de réalisation non limitatifs, en référence aux dessins annexés, dans lesquels :
- la figure 1, précédemment commentée, montre un exemple de contenu d'une mémoire TRIE ;
- la figure 2, précédemment commentée, est un organigramme d'une procédure d'analyse classique exécutée pour consulter la mémoire TRIE;
- la figure 3 est un schéma synoptique d'un routeur de paquets selon l'invention ;
- la figure 4 est un diagramme montrant la structure d'un exemple d'en-tête de paquet ;
- les figures 5 et 6 sont des diagrammes montrant la structure de cellules de la mémoire TRIE du routeur ; et
- la figure 7 est un organigramme d'une procédure d'analyse selon l'invention pour consulter une mémoire TRIE.

Pour illustrer la description ci-après, on considère le cas où les paquets acheminés par le routeur selon l'invention sont transportés sur un réseau à mode de transfert asynchrone (ATM), et on suppose que l'en-tête de chaque paquet est toujours contenu dans une cellule ATM.

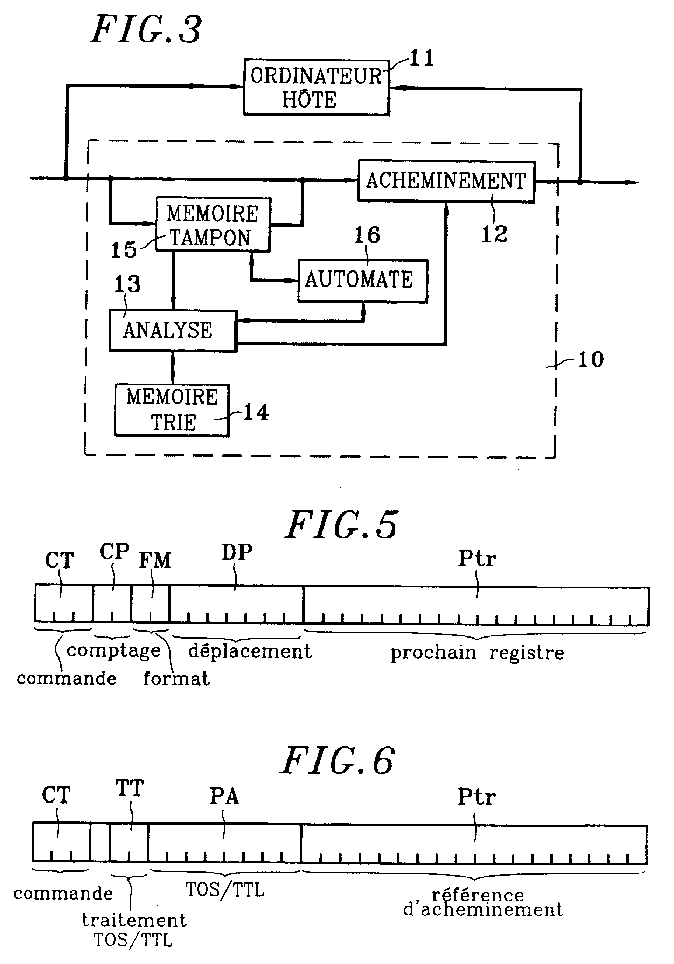

Le routeur 10 représenté par la figure 3 fonctionne avec un ordinateur-hôte 11. L'ordinateur hôte 11 peut émettre et recevoir des paquets, notamment pour la gestion du processus de routage. Il dispose pour cela d'une voie virtuelle (VC) en entrée et en sortie du routeur 10.

Le routeur 10 comprend un module d'acheminement (« forwarding ») 12 qui achemine les paquets reçus selon des instructions, ci-après appelées « références d'acheminement » ou « status final », obtenues par un module d'analyse 13 à partir d'une mémoire 14 organisée comme un tableau de mémoire TRIE. Dans le cas d'un équipement de réseau ATM, le module d'acheminement 12 peut réaliser essentiellement une traduction des identifiants de conduits et de voies virtuels VPINCI (« Virtual Path Identifier / Virtual Channel Identifier »), la fusion des voies virtuelles selon les conduits virtuels, et la délivrance des paquets sur les ports de sortie du dispositif. Pour cela, il a besoin de connaître les couples VPINCI des paquets sortants, qui peuvent constituer les références d'acheminement stockées dans la mémoire TRIE 14.

Chaque cellule ATM contenant l'en-tête d'un paquet à router transite par une mémoire tampon 15 à laquelle le module d'analyse 13 a accès pour analyser des portions de ces en-têtes au moyen de la mémoire TRIE 14. Cette analyse est par exemple effectuée par quartets (K=4).

Configurer le routeur 10 consiste à enregistrer les données pertinentes dans la mémoire TRIE 14. Cette opération est réalisée par un module (non représenté) de gestion de la mémoire TRIE sous le contrôle de l'ordinateur-hôte 11. Les commandes de configuration peuvent être reçues dans des paquets transmis sur le réseau et destinés au routeur 10. Pour une façon de gérer dynamiquement le contenu de la mémoire TRIE 14, on pourra se reporter à FR-A-2 783 618.

Dans l'exemple de routeur représenté sur la figure 3, le module d'analyse 13 coopère avec un automate 16 programmé pour effectuer certains contrôles et certaines actions sur les en-têtes des paquets, d'une manière dépendante des protocoles de communication supportés par le routeur. En dehors de cet automate 16, le fonctionnement du routeur 10 est indépendant des protocoles de transport des paquets.

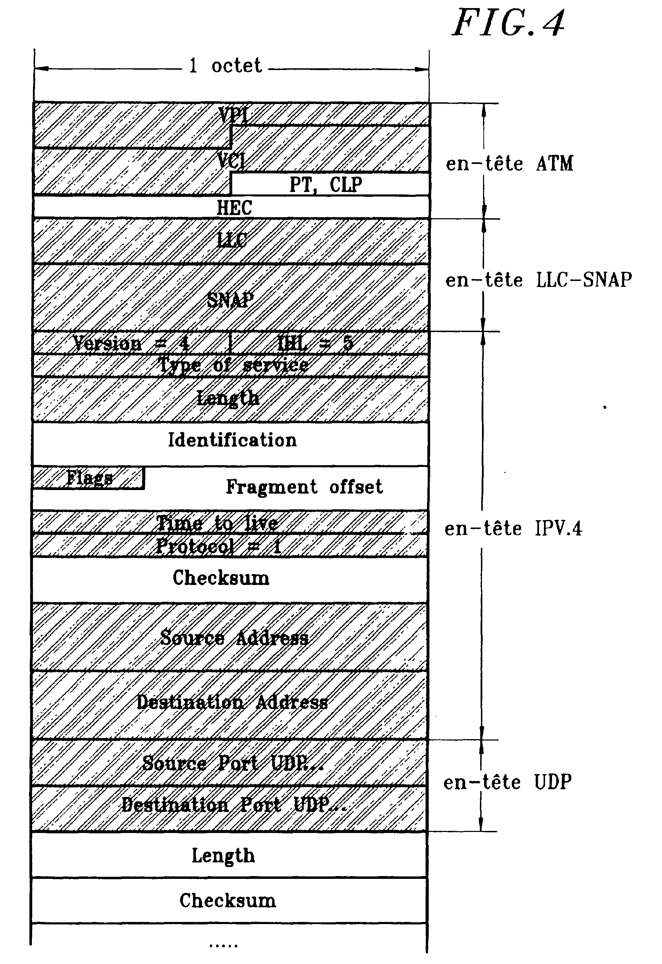

La figure 4 montre un cas particulier de structure de l'en-tête d'un paquet pouvant être traité par le routeur selon l'invention. Dans cet exemple, le paquet est un paquet IPV4 (« Internet Protocol - Version 4 »), transportant le protocole applicatif UDP (« User Datagram Protocol »), encapsulé dans des cellules ATM par l'intermédiaire d'un protocole de niveau 2 de type LLC-SNAP (« Logical Link Control - Sub Network Access Protocol »). Les noms de champs indiqués sur la figure sont ceux employés dans les spécifications pertinentes concernant ces protocoles. L'en-tête global à analyser consiste en l'imbrication de l'en-tête de cinq octets de la cellule ATM, de l'en-tête LLC-SNAP, de l'en-tête du protocole IPV4 et de son extension UDP.

D'autres types de protocoles et d'encapsulations peuvent être supportés par le routeur 10. On peut par exemple prendre en compte le protocole PPP (« Point-to-Point Protocol ») au lieu du protocole SNAP au niveau 2, ou encore la technique MPLS (« Multi-Protocol Label Switching ») au niveau 2 et/ou au niveau 3. Dans ces conditions, les successions de type d'en-têtes suivantes sont susceptibles d'être rencontrées dans la trame AAL5 (« ATM Adaptation Layer n°5 ») suivant l'en-tête de cellule ATM :
IP
IP, IP
LLC-SNAP, IP
LLC-PPP, IP
MPLS
MPLS, ..., MPLS
LLC-SNAP, MPLS
MPLS, IP
MPLS, ..., MPLS, IP
MPLS, LLC-SNAP, IP
MPLS, ..., MPLS, LLC-SNAP, IP
IP désignant soit la version 4, soit la version 6 de l'Internet Protocol et les en-têtes des couches au-delà de la couche réseau (TCP, UDP...).

Dans le cas particulier LLC-SNAP/IPV4/UDP, la figure 4 montre en hachuré les champs de l'en-tête éventuellement pertinents pour l'opération de routage. Selon le type de routage effectué, certains de ces champs peuvent ne pas être pris en considération, en plus des champs non hachurés représentés sur la figure. Pour éviter une augmentation inutile de la taille de la mémoire TRIE, le contenu de ces champs est simplement ignoré au cours du processus d'analyse.

L'analyse porte ainsi sur des portions différentes de l'en-tête qui font successivement l'objet d'analyses partielles fournissant des références intermédiaires, jusqu'à la dernière portion pour laquelle la mémoire TRIE 14 fournit la référence d'acheminement destinée au module 12.

Le procédé selon l'invention permet d'analyser les champs de l'en-tête dans n'importe quel ordre. Ceci est utile dans un certain nombre de cas où l'analyse dans l'ordre d'apparition des champs s'avère insuffisante. Par exemple, on peut noter :
- qu'il est intéressant d'analyser le champ TOS (Type Of Service) de l'en-tête IP après l'adresse de destination, alors que ces champs apparaissent dans l'ordre inverse, afin de limiter la taille mémoire requise ;
- qu'avec des protocoles de réservation de type RSVP, il est nécessaire de pouvoir revenir en arrière sur les champs « Protocol » et « destination address » de l'en-tête IP après avoir analysé l'en-tête de niveau 4 ;
- que dans des applications de multidiffusion, il importe de pouvoir revenir en arrière sur le champ TTL (Time To Live) de l'en-tête IP ainsi que sur les identifiants VPINCI de l'entrée du routeur dans l'en-tête ATM afin de pouvoir empêcher les phénomènes de bouclage entre plusieurs nceuds du réseau...

L'organisation des données dans la mémoire TRIE 14, et la façon de les consulter, est adaptée afin de permettre la programmation de sauts quelconques entre les champs de l'en-tête analysés et entre les registres portiers de la mémoire TRIE.

Les figures 5 et 6 illustrent, dans un mode de réalisation particulier, la structure des données contenues dans les cellules élémentaires non vides de la mémoire TRIE 14. Dans cet exemple, chaque cellule élémentaire représente une zone de mémoire de 32 bits. Les trois premiers bits de la cellule de la mémoire TRIE forment un champ de commande CT destiné à contrôler l'état de l'automate 16.

A titre d'exemple, l'automate 16 peut avoir 5 états :
- « inactif », lorsqu'aucun en-tête n'est présent dans la mémoire tampon 15 ;
- « ATM », lorsque le module 13 est en train d'analyser les identifiants VPINCI de l'en-tête ATM ;
- « MPLS », lorsque le module 13 est en train d'analyser un en-tête MPLS ;
- « IP », lorsque le module 13 est en train d'analyser un en-tête IP ou ses extensions ;
- « autre », lorsque le module 13 est en train d'analyser un autre type d'en-tête (LLC, SNAP, PPP, ...).

Le codage du champ de commande CT des cellules élémentaires de la mémoire TRIE est par exemple le suivant :
- CT=000 : état de l'automate inchangé,
- CT=001 : fin d'analyse,
- CT=01a : transition vers l'état « autre »,
- CT=10a : transition vers l'état « IP »,
- CT=11a : transition vers l'état « MPLS ».

Le bit a ci-dessus indique si la trame provient de l'ordinateur-hôte 11 ou non afin que l'automate 16 inhibe le cas échéant le traitement des champs TTL et « checksum » de l'en-tête IPV4.

Dans l'exemple des figures 5 et 6, les dix-huit bits de poids les plus faibles de la cellule élémentaire de la mémoire TRIE forment un champ Ptr contenant soit un pointeur vers le prochain registre de la mémoire TRIE à partir duquel l'analyse est à poursuivre (registre portier ou non) dans le cas de la figure 5, soit la référence d'acheminement destinée au module 12 dans le cas de la figure 6.

Dans ce dernier cas, le contenu du champ de commande CT est 001, étant donné que la délivrance de la référence acheminement termine le processus d'analyse à l'aide de la mémoire TRIE.

Dans le cas de la figure 5, le pointeur contenu dans le champ Ptr peut désigner le registre de poursuite d'analyse directement ou indirectement selon le contenu d'un champ de comptage CP de deux bits. Un compteur peut être alloué à toute cellule de la mémoire TRIE. Ce compteur est alors incrémenté chaque fois que cette cellule est rencontrée dans le parcours effectué au cours de l'analyse. Chaque compteur V(A) est matérialisé dans un emplacement de mémoire couplé à un autre emplacement contenant un pointeur PT(A) vers un registre de poursuite d'analyse dans la mémoire TRIE.

Lorsque le contenu du champ de comptage CP est différent de 00, le champ Ptr de la cellule de la mémoire TRIE contient l'adresse de l'emplacement de mémoire où est mémorisé le compteur pertinent V(A), et l'emplacement PT(A) couplé à ce dernier contient le pointeur vers le registre de la mémoire TRIE à utiliser pour poursuivre l'analyse. Lorsque les deux bits du champ CP sont 00, le champ Ptr de la cellule élémentaire pointe directement vers le registre de poursuite d'analyse dans la mémoire TRIE.

Pour désigner quelle portion de l'en-tête du paquet doit faire l'objet de la suite de l'analyse, la cellule élémentaire ne contenant pas de référence d'acheminement (figure 5) comprend un champ de format FM de deux bits et un champ de déplacement DP de sept bits. Le champ FM indique le format de représentation numérique de l'emplacement visé de la mémoire tampon 15. Cette représentation peut être :
- séquentielle (FM=00) si les quartets à analyser se succèdent immédiatement dans l'en-tête stocké dans la mémoire 15,
- absolue (FM=11) pour désigner la position absolue du quartet indépendamment du sous-en-tête en cours d'analyse (ceci est utile par exemple pour retourner sur le champ VC de l'en-tête ATM au cours du traitement de l'en-tête IP dans des applications de multidiffusion),
- différentielle (FM=10), pour exprimer la position du prochain quartet par rapport au quartet courant, ce qui est utile lorsque la longueur de certains en-têtes n'est pas connue a priori (par exemple dans l'état « autre »),
- relative (FM=01) pour exprimer la position du prochain quartet par rapport à un emplacement déterminé de la mémoire tampon 15, repéré par une valeur de décalage gérée par l'automate 16. Cette valeur de décalage OFFSET désigne typiquement le début du sous-en-tête en cours d'analyse. L'automate 16 le gère en ajoutant lors des transitions d'état la longueur de l'en-tête correspondant à l'état antérieur.

Les autres tâches assurées par l'automate 16 comprennent les vérifications d'erreurs effectuées sur la base du champ « checksum » de l'en-tête IPV4 et les manipulations éventuelles des champs TOS et TTL de l'en-tête IP. Ces modifications éventuelles sont effectuées à l'issue du processus d'analyse, sur la base de paramètres fournis par la mémoire TRIE avec la référence d'acheminement. Ces paramètres sont contenus dans un champ TT de deux bits et dans un champ PA de huit bits de chaque cellule élémentaire contenant une référence d'acheminement (figure 6). Le codage est par exemple le suivant :
- TT=00 : aucune modification des champs TTL et TOS (utilisable pour les paquets destinés à l'ordinateur-hôte 11) ;
- TT=01 : décrémenter TTL de 1 ;
- TT=10 : décrémenter TTL du contenu du champ PA ;
- TT=11 : décrémenter TTL de 1 et remplacer TOS par le contenu du champ PA.

Au moment d'une transition de l'état « ATM » ou « MPLS » ou « autre » vers l'état « IP » en version 4, l'automate 16 vérifie que le contenu du champ « checksum » de l'en-tête IPV4 est conforme au reste de l'en-tête selon le codage détecteur d'erreurs appliqué dans ces en-têtes conformément aux spécifications. Au moment de la transition de l'état « IP » vers l'état « inactif » (CT=001), l'automate 16 met à jour le champ « checksum » de l'en-tête IPV4 en faisant la somme de celui contenu dans l'en-tête entrant et du code détecteur d'erreur calculé sur la base des modifications faites dans les champs TTL et/ou TOS.

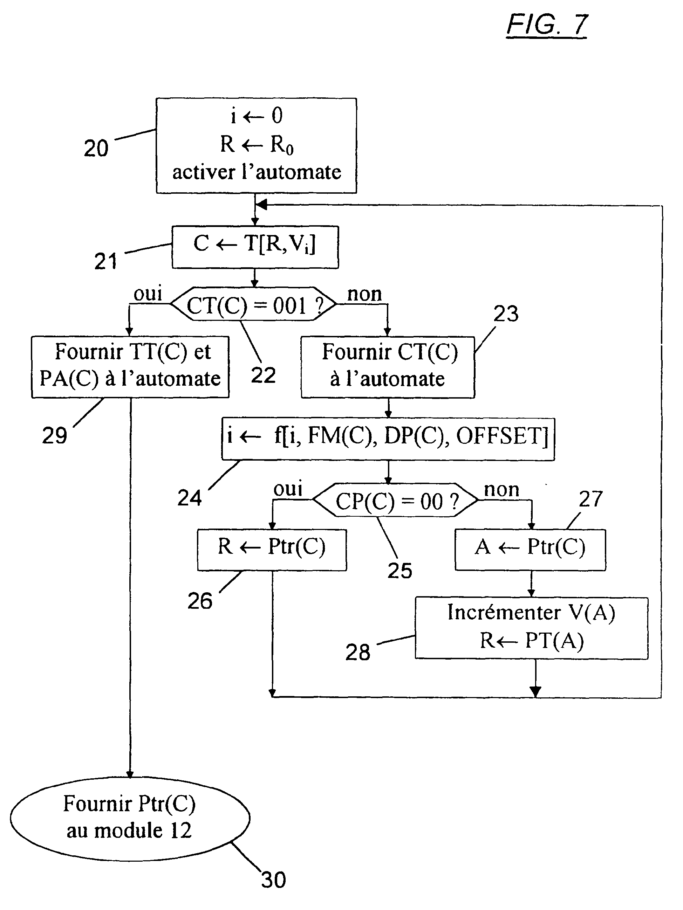

La figure 7 montre l'organigramme d'une procédure d'analyse que peut mettre en oeuvre le module 13 dans les exemples considérés ci-dessus. A l'initialisation 20, le numéro i du quartet analysé est mis à 0 pour désigner le début de l'en-tête ATM dans la mémoire tampon 15, le registre portier de base R₀ est sélectionné comme registre R, et l'automate 16 reçoit une commande d'activation (passage de l'état « inactif » à l'état « ATM »).

Dans chaque itération i, le contenu C de la cellule élémentaire T[R,Vᵢ] du registre sélectionné R, désignée par le (i+1)-ième quartet Vᵢ de l'en-tête stocké dans la mémoire tampon 15, est lu à l'étape 21. Si le champ de commande CT(C) de cette cellule est différent de 001 (test 22), le contenu de ce champ de commande est fourni à l'automate 16 à l'étape 23 pour qu'il adopte le cas échéant les changements d'état requis en procédant aux actions correspondantes, puis le module 13 détermine comment l'analyse doit être poursuivie, en identifiant la position dans la mémoire tampon 15 du prochain quartet à analyser à l'étape 24, ainsi que le prochain registre de la mémoire TRIE à utiliser pour poursuivre l'analyse aux étapes 25 à 28.

A l'étape 24, l'index du prochain quartet à analyser est calculé en fonction de l'index du quartet courant i, du code de position représenté par les champs FM et DP de la cellule de la mémoire TRIE et éventuellement par le paramètre de décalage OFFSET géré par l'automate 16. Avec les conventions précédemment considérées, l'expression de la fonction f est :
f(i,00,DP,OFFSET) = i + 1;
f(i,11,DP,OFFSET) = DP;
f(i,10,DP,OFFSET) = i + DP, avec DP positif ou négatif ; et
f(i,01,DP,OFFSET) = OFFSET + DP, avec DP positif ou négatif.

A l'étape 25, le module 13 examine le champ CP de la cellule courante de la mémoire TRIE pour déterminer si un comptage est nécessaire. Si aucun comptage n'est nécessaire (CP=00), le registre désigné par le pointeur lu dans le champ Ptr de la cellule est sélectionné comme registre R pour l'itération suivante à l'étape 26. Si CP(C) #00 à l'étape 25, l'adresse A du compteur à incrémenter est obtenue à l'étape 27 comme étant le contenu du champ Ptr de la cellule courante de la mémoire TRIE. Ensuite, à l'étape 28, le module 13 commande l'incrémentation de ce compteur V(A) et récupère le pointeur PT(A) afin de sélectionner le registre R pour l'itération suivante.

Ce processus d'analyse se poursuit en enchaînant plusieurs analyses logiques fournissant des status intermédiaires. Il se termine lorsque la valeur 001 apparaît dans le champ de commande CT(C) de la cellule courante (test 22). A ce moment, le module 13 fournit à l'automate 16 les paramètres contenus dans les champs TT et PA de la cellule à l'étape 29, puis fournit le status final Ptr(C) au module d'acheminement 12 à l'étape 30.

## Revendications

1. Procédé pour produire des références d'acheminement en relation avec des paquets de données au moyen d'une mémoire TRIE (14) ayant plusieurs registres portiers, dans lequel différentes portions d'un en-tête de chaque paquet contenant des informations de protocole sont analysées successivement à partir de registres portiers différents de la mémoire TRIE,
**caractérisé en ce qu'**à l'arrivée d'un paquet, l'en-tête dudit paquet est stocké dans une mémoire tampon (15),
**en ce que** chaque analyse d'une portion de l'en-tête du paquet arrivé produit soit la référence d'acheminement associée au paquet, soit une référence intermédiaire comportant un premier code (FM, DP) permettant de localiser, à un emplacement arbitraire de la mémoire tampon, une portion suivante à analyser et un second code (Ptr) permettant de localiser, à un emplacement arbitraire de la mémoire TRIE, un registre portier à partir duquel ladite portion suivante est à analyser,
et **en ce qu'**après analyse d'une première portion de l'en-tête stocké, des portions suivantes dudit en-tête sont analysées conformément aux premiers et seconds codes contenus dans les références intermédiaires successivement produites, jusqu'à ce que la référence d'acheminement soit produite.

2. Procédé selon la revendication 1, dans lequel la mémoire TRIE (14) consiste en des cellules élémentaires ayant chacune un champ (CT) indiquant si la cellule contient une référence d'acheminement, et dans lequel chaque cellule élémentaire ne contenant pas de référence d'acheminement a au moins un premier champ (FM, DP) pour contenir une information désignant un emplacement de la mémoire tampon (15) où l'analyse est à poursuivre et un second champ (Ptr) pour contenir une information désignant un registre de poursuite d'analyse de la mémoire TRIE.

3. Procédé selon la revendication 2, dans lequel ladite information désignant un emplacement de la mémoire tampon (15) où l'analyse est à poursuivre comporte un code de format (FM) indiquant la représentation numérique dudit emplacement de la mémoire tampon et un code d'adresse (DP) désignant ledit emplacement de la mémoire tampon selon ladite représentation.

4. Procédé selon la revendication 3, dans lequel le code de format (FM) indique (i) une représentation séquentielle, où les éléments de données de l'en-tête stocké sont analysés dans leur ordre d'apparition, (ii) une représentation absolue, où le prochain élément de données à analyser est désigné par sa position absolue dans l'en-tête stocké, (iii) une représentation différentielle, où le prochain élément de données à analyser est désigné par sa position par rapport à l'élément de données en cours d'analyse, ou (iv) une représentation relative, où le prochain élément de données à analyser est désigné par sa position par rapport à une portion déterminée de l'en-tête stocké.

5. Procédé selon l'une quelconque des revendications 2 à 4, dans lequel chaque cellule élémentaire ne contenant pas de référence d'acheminement a un champ supplémentaire (CC) pour contenir une information indiquant si une opération de comptage est requise, et dans lequel chaque cellule élémentaire ne contenant pas de référence d'acheminement et dont ledit champ supplémentaire (CC) indique qu'une opération de comptage est requise a dans son second champ (Ptr) un pointeur (A) vers un emplacement de mémoire (V(A)) contenant un compteur à incrémenter lors de ladite opération et associé à un autre emplacement de mémoire (PT(A)) contenant un pointeur (R) vers le registre de poursuite d'analyse de la mémoire TRIE (14).

6. Procédé selon l'une quelconque des revendications 1 à 5, dans lequel chaque cellule élémentaire de la mémoire TRIE (14) comporte un champ de commande (CT) pour contenir des instructions destinées à un automate auxiliaire (16).

7. Procédé selon la revendication 6, dans lequel une référence d'acheminement est délivrée depuis la mémoire TRIE (14) avec des paramètres fournis à l'automate (16) pour spécifier des modifications éventuelles à opérer sur une portion de l'en-tête du paquet stocké dans la mémoire tampon (15).

8. Dispositif de traitement de paquets (10), comprenant un circuit (13) d'analyse de l'en-tête de paquets reçus, une mémoire associative de type TRIE (14) ayant plusieurs registres portiers, et une mémoire tampon (15) pour contenir l'en-tête de chaque paquet reçu,
ledit circuit étant adapté pour analyser successivement différentes portions de l'en-tête de chaque paquet reçu contenant des informations de protocole à partir de registres portiers différents de la mémoire TRIE, de telle façon que chaque analyse d'une portion de l'en-tête du paquet produise soit la référence d'acheminement associée au paquet, soit une référence intermédiaire comportant un premier code (FM, DP) permettant de localiser, à un emplacement arbitraire de la mémoire tampon, une portion suivante à analyser et un second code (Ptr) permettant de localiser, à un emplacement arbitraire de la mémoire TRIE, un registre portier à partir duquel ladite portion suivante est à analyser,
ledit circuit étant adapté pour poursuivre l'analyse des portions de l'en-tête stocké d'un paquet reçu à partir d'une première portion dudit en-tête, conformément aux premiers et seconds codes contenus dans les références intermédiaires successivement produites, jusqu'à ce que la référence d'acheminement soit produite.

9. Dispositif selon la revendication 8, dans lequel la mémoire TRIE (14) consiste en des cellules élémentaires ayant chacune un champ (CT) indiquant si la cellule contient une référence d'acheminement, et dans lequel chaque cellule élémentaire ne contenant pas de référence d'acheminement a au moins un premier champ (FM, DP) pour contenir une information désignant un emplacement de la mémoire tampon (15) où l'analyse est à poursuivre et un second champ (Ptr) pour contenir une information désignant un registre de poursuite d'analyse de la mémoire TRIE.

10. Dispositif selon la revendication 9, dans lequel ladite information désignant un emplacement de la mémoire tampon (15) où l'analyse est à poursuivre comporte un code de format (FM) indiquant la représentation numérique dudit emplacement de la mémoire tampon et un code d'adresse (DP) désignant ledit emplacement de la mémoire tampon selon ladite représentation.

11. Dispositif selon la revendication 10, dans lequel le code de format (FM) indique (i) une représentation séquentielle, où les éléments de données de l'en-tête stocké sont analysés dans leur ordre d'apparition, (ii) une représentation absolue, où le prochain élément de données à analyser est désigné par sa position absolue dans l'en-tête stocké, (iii) une représentation différentielle, où le prochain élément de données à analyser est désigné par sa position par rapport à l'élément de données en cours d'analyse, ou (iv) une représentation relative, où le prochain élément de données à analyser est désigné par sa position par rapport à une portion déterminée de l'en-tête stocké.

12. Dispositif selon l'une quelconque des revendications 9 à 11, dans lequel chaque cellule élémentaire ne contenant pas de référence d'acheminement a un champ supplémentaire (CC) pour contenir une information indiquant si une opération de comptage est requise, et dans lequel chaque cellule élémentaire ne contenant pas de référence d'acheminement et dont ledit champ supplémentaire (CC) indique qu'une opération de comptage est requise a dans son second champ (Ptr) un pointeur (A) vers un emplacement de mémoire (V(A)) contenant un compteur à incrémenter lors de ladite opération et associé à un autre emplacement de mémoire (PT(A)) contenant un pointeur (R) vers le registre de poursuite d'analyse de la mémoire TRIE (14).

## Claims

1. Method of producing forwarding references in conjunction with data packets by means of a TRIE memory (14) having several gate registers, in which different portions of a header of each packet containing protocol data are analysed successively using different gate registers of the TRIE memory, **characterized in that** on the arrival of a packet, the header of said packet is stored in a buffer memory (15), **in that** each analysis of a header portion of the packet that has arrived produces either the forwarding reference associated with the packet or an intermediate reference containing a first code (FM, DP), making it possible to locate, at any location of the buffer memory, a next portion to be analysed, and a second code (Ptr), making it possible to locate, at any location of the TRIE memory, a gate register from which said next portion is to be analysed, and **in that**, after a first portion of the stored header has been analysed, subsequent portions of said header are analysed in accordance with the first and second codes contained in the intermediate references produced in succession until the forwarding reference is produced.

2. Method according to Claim 1, in which the TRIE memory (14) consists of elementary cells each having a field (CT) indicating whether the cell contains a forwarding reference, and in which each elementary cell which does not contain a forwarding reference has at least a first field (FM, DP) to contain a piece of information designating a location of the buffer memory (15) at which the analysis is to be continued and a second field (Ptr) to contain a piece of information designating a continue analysis register of the TRIE memory.

3. Method according to Claim 2, in which said information designating a location of the buffer memory (15) at which the analysis is to be continued contains a format code (FM) indicating the numerical representation of said location of the buffer memory and an address code (DP) designating said location of the buffer memory in accordance with said representation.

4. Method according to Claim 3, in which the format code (FM) indicates (i) a sequential representation, where the data elements of the stored header are analysed in the order in which they appear, (ii) an absolute representation, where the next data element to be analysed is designated by its absolute position in the stored header, (iii) a differential representation where the next data element to be analysed is designated by its position relative to the data element currently being analysed, or (iv) a relative representation, where the next data element to be analysed is designated by its position relative to a given portion of the stored header.

5. Method according to any one of Claims 2 to 4, in which each elementary cell which does not contain a forwarding reference has an additional field (CC) which contains a piece of information indicating whether a counting operation is necessary, and in which each elementary cell which does not contain a forwarding reference and whose additional field (CC) indicates that a counting operation is necessary has, in its second field (Ptr), a pointer (A) to a memory location (V(A)) containing a counter to be incremented when said operation is performed and associated with another memory location (PT(A)) containing a pointer (R) to the continue analysis register of the TRIE memory (14).

6. Method according to any one of Claims 1 to 5, in which each elementary cell of the TRIE memory (14) has a command field (CT) which contains instructions for an auxiliary controller (16).

7. Method according to Claim 6, in which a forwarding reference is issued from the TRIE memory (14) with parameters supplied to the controller (16) so as to specify any amendments to be applied on a portion of the header of the packet stored in the buffer memory (15).

8. Packet processing device (10) having a circuit (13) for analysing the header of packets received, an associative TRIE memory (14) having several gate registers, and a buffer memory (15) for containing the header of each packet received, said circuit being adapted to analyse, in succession, different portions of the header of each packet received containing protocol data using different gate registers of the TRIE memory, such that each analysis of a header portion of the packet produces either the forwarding reference associated with the packet or an intermediate reference containing a first code (FM, DP) making it possible to locate, at any location of the buffer memory, a next portion to be analysed, and a second code (Ptr) making it possible to locate, at any location of the TRIE memory, a gate register from which said next portion is to be analysed, said circuit being adapted to continue the analysis of the portions of the header stored of a packet received from a first portion of said header, in accordance with the first and second codes contained in the intermediate references produced in succession until the forwarding reference is produced.

9. Device according to Claim 8, in which the TRIE memory (14) comprises elementary cells each having a field (CT) indicating whether the cell contains a forwarding reference, and in which each elementary cell which does not contain a forwarding reference has at least a first field (FM, DP) to contain a piece of information designating a location of the buffer memory (15) at which the analysis is to be continued and a second field (Ptr) to contain a piece of information designating a continue analysis register of the TRIE memory.

10. Device according to Claim 9, in which said information designating a location of the buffer memory (15) at which the analysis is to be continued contains a format code (FM) indicating the numerical representation of said location of the buffer memory and an address code (DP) designating said location of the buffer memory in accordance with said representation.

11. Device according to Claim 10, in which the format code (FM) indicates (i) a sequential representation, where the data elements of the stored header are analysed in the order in which they appear, (ii) an absolute representation, where the next data element to be analysed is designated by its absolute position in the stored header, (iii) a differential representation, where the next data element to be analysed is designated by its position relative to the data element currently being analysed, or (iv) a relative representation, where the next data element to be analysed is designated by its position relative to a given portion of the stored header.

12. Device according to any one of Claims 9 to 11, in which each elementary cell which does not contain a forwarding reference has an additional field (CC) which contains a piece of information indicating whether a counting operation is necessary, and in which each elementary cell which does not contain a forwarding reference and of which said additional field (CC) indicates that a counting operation is necessary has, in its second field (Ptr), a pointer (A) to a memory location (V(A)) containing a counter to be incremented when said operation is performed and associated with another memory location (PT(A)) containing a pointer (R) to the continue analysis register of the TRIE memory (14).

## Patentansprüche

1. Verfahren zur Erzeugung von Weiterleitungsreferenzen in Zusammenhang mit Datenpaketen mittels eines TRIE-Speichers (14), der mehrere Torregister hat, bei dem verschiedene Abschnitte einer Kopfzeile jedes Pakets, die Protokollinformationen enthalten, nacheinander ausgehend von verschiedenen Torregistern des TRIE-Speichers analysiert werden,
**dadurch gekennzeichnet, dass** bei Ankunft eines Pakets die Kopfzeile des Pakets in einem Pufferspeicher (15) gespeichert wird,
dass jede Analyse eines Abschnitts der Kopfzeile des angekommenen Pakets entweder die dem Paket zugeordnete Weiterleitungsreferenz oder eine Zwischenreferenz erzeugt, die einen ersten Code (FM, DP), der es ermöglicht, an einer willkürlichen Stelle des Pufferspeichers einen folgenden zu analysierenden Abschnitt zu lokalisieren, und einen zweiten Code (Ptr) enthält, der es ermöglicht, an einer willkürlichen Stelle des TRIE-Speichers ein Torregister zu lokalisieren, von dem aus der folgende Abschnitt zu analysieren ist,
und dass nach der Analyse eines ersten Abschnitts der gespeicherten Kopfzeile nachfolgende Abschnitte der Kopfzeile gemäß den in den nacheinander erzeugten Zwischenreferenzen enthaltenen ersten und zweiten Codes analysiert werden, bis die Weiterleitungsreferenz erzeugt ist.

2. Verfahren nach Anspruch 1, bei dem der TRIE-Speicher (14) aus Elementarzellen besteht, die je ein Feld (CT) haben, das anzeigt, ob die Zelle eine Weiterleitungsreferenz enthält, und bei dem jede Elementarzelle, die keine Weiterleitungsreferenz enthält, mindestens ein erstes Feld (FM, DP), um eine Information zu enthalten, die eine Stelle des Pufferspeichers (15) bezeichnet, wo die Analyse fortzusetzen ist, und ein zweites Feld (Ptr) hat, um eine Information zu enthalten, die ein Analysefortsetzungsregister des TRIE-Speichers bezeichnet.

3. Verfahren nach Anspruch 2, bei dem die Information, die eine Stelle des Pufferspeichers (15) bezeichnet, wo die Analyse fortzusetzen ist, einen Formatcode (FM), der die digitale Darstellung der Stelle des Pufferspeichers anzeigt, und einen Adressencode (DP) aufweist, der die Stelle des Pufferspeichers gemäß der Darstellung anzeigt.

4. Verfahren nach Anspruch 3, bei dem bei dem der Formatcode (FM) (i) eine sequentielle Darstellung, in der die Datenelemente der gespeicherten Kopfzeile in ihrer Erscheinungsordnung analysiert werden, (ii) eine absolute Darstellung, in der das nächste zu analysierende Datenelement durch seine absolute Position in der gespeicherten Kopfzeile bezeichnet ist, (iii) eine differentielle Darstellung, in der das nächste zu analysierende Datenelement durch seine Position bezüglich des in Analyse befindlichen Datenelements bezeichnet ist, oder (iv) eine relative Darstellung anzeigt, in der das nächste zu analysierende Datenelement durch seine Position bezüglich eines bestimmten Abschnitts der gespeicherten Kopfzeile bezeichnet ist.

5. Verfahren nach einem der Ansprüche 2 bis 4, bei dem jede Elementarzelle, die keine Weiterleitungsreferenz enthält, ein zusätzliches Feld (CC) hat, um eine Information zu enthalten, die anzeigt, ob eine Zähloperation erforderlich ist, und bei dem jede Elementarzelle, die keine Weiterleitungsreferenz enthält und deren zusätzliches Feld (CC) anzeigt, dass eine Zähloperation erforderlich ist, in ihrem zweiten Feld (Ptr) einen Zeiger (A) auf eine Speicherstelle (V(A)) hat, die einen Zähler enthält, der bei der Operation zu inkrementieren ist und einer anderen Speicherstelle (PT(A)) zugeordnet ist, die einen Zeiger (R) auf das Analysefortsetzungsregister des TRIE-Speichers (14) enthält.

6. Verfahren nach einem der Ansprüche 1 bis 5, bei dem jede Elementarzelle des TRIE-Speichers (14) ein Steuerfeld (CT) aufweist, um Anweisungen zu enthalten, die für einen Hilfsautomaten (16) bestimmt sind.

7. Verfahren nach Anspruch 6, bei dem eine Weiterleitungsreferenz ausgehend vom TRIE-Speicher (14) mit an den Automaten (16) gelieferten Parametern ausgegeben wird, um eventuelle Veränderungen zu spezifizieren, die in einem Abschnitt der Kopfzeile des im Pufferspeicher (15) gespeicherten Pakets auszuführen sind.

8. Vorrichtung zur Paketverarbeitung (10), die eine Schaltung (13) zur Analyse der Kopfzeile von empfangenen Paketen, einen Assoziativspeicher vom Typ TRIE (14), der mehrere Torregister hat, und einen Pufferspeicher (15) aufweist, um die Kopfzeile jedes empfangenen Pakets zu enthalten,
wobei die Schaltung geeignet ist, um nacheinander verschiedene Abschnitte der Kopfzeile jedes empfangenen Pakets zu analysieren, die Protokollinformationen ausgehend von verschiedenen Torregistern des TRIE-Speichers enthalten, derart, dass jede Analyse eines Abschnitts der Kopfzeile des Pakets entweder die dem Paket zugeordnete Weiterleitungsreferenz oder eine Zwischenreferenz erzeugt, die einen ersten Code {FM, DP}, der es ermöglicht, an einer willkürlichten Stelle des Pufferspeichers einen folgenden zu analysierenden Abschnitt zu lokalisieren, und einen zweiten Code (Ptr) aufweist, der es ermöglicht, an einer willkürlichen Stelle des TRIE-Speichers ein Torregister zu lokalisieren, von dem ausgehend der folgende Abschnitt zu analysieren ist,
wobei die Schaltung geeignet ist, um die Analyse der Abschnitte der gespeicherten Kopfzeile eines empfangenen Pakets ausgehend von einem ersten Abschnitt der Kopfzeile entsprechend den ersten und zweiten in den erzeugten aufeinanderfolgenden Zwischenreferenzen enthaltenen Codes fortzusetzen, bis die Weiterleitungsreferenz erzeugt ist.

9. Vorrichtung nach Anspruch 8, bei der der TRIE-Speicher (14) aus Elementarzellen besteht, die je ein Feld (CT) haben, das anzeigt, ob die Zelle eine Weiterleitungsreferenz enthält, und bei der jede Elementarzelle, die keine Weiterleitungsreferenz enthält, mindestens ein erstes Feld (FM, DP), um eine Information zu enthalten, die eine Stelle des Pufferspeichers (15) bezeichnet, wo die Analyse fortzusetzen ist, und ein zweites Feld (Ptr) hat, um eine Information zu enthalten, die ein Analysefortsetzungsregister des TRIE-Speichers bezeichnet.

10. Vorrichtung nach Anspruch 9, bei der die Information, die eine Stelle des Pufferspeichers (15) bezeichnet, wo die Analyse fortzusetzen ist, einen Formatcode (FM), der die digitale Darstellung der Stelle des Pufferspeichers anzeigt, und einen Adressencode (DP) aufweist, der die Stelle des Pufferspeicher gemäß der Darstellung bezeichnet.

11. Vorrichtung nach Anspruch 10, bei der der Formatcode (FM) (i) eine sequentielle Darstellung, in der die Datenelemente der gespeicherten Kopfzeile in ihrer Erscheinungsordnung analysiert werden, (ii) eine absolute Darstellung, in der das nächste zu analysierende Datenelement durch seine absolute Position in der gespeicherten Kopfzeile bezeichnet wird, (iii) eine differentielle Darstellung, in der das nächste zu analysierende Datenelement durch seine Position bezüglich des in Analyse befindlichen Datenelements bezeichnet wird, oder (iv) eine relative Darstellung anzeigt, in der das nächste zu analysierende Datenelement durch seine Position bezüglich eines bestimmten Abschnitts der gespeicherten Kopfzeile bezeichnet wird.

12. Vorrichtung nach einem der Ansprüche 9 bis 11, bei der jede Elementarzelle, die keine Weiterleitungsreferenz enthält, ein zusätzliches Feld (CC) hat, um eine Information zu enthalten, die anzeigt, ob eine Zähloperation erforderlich ist, und bei der jede Elementarzelle, die keine Weiterleitungsreferenz enthält und deren zusätzliches Feld (CC) anzeigt, dass eine Zähloperation erforderlich ist, in ihrem zweiten Feld (Ptr) einen Zeiger (A) auf eine Speicherstelle (V(A)) hat, die einen Zähler enthält, der bei der Operation zu inkrementieren ist und einer anderen Speicherstelle (PT(A)) zugeordnet ist, die einen Zeiger (R) auf das Analysefortsetzungsregister des TRIE-Speichers (14) enthält.
